# EUROPEAN PATENT SPECIFICATION

(11) **EP 1 790 510 B1**
(45) Date of publication and mention of the grant of the patent: **26.08.2009**
(21) Application number: 06124910.8
(22) Date of filing: 28.11.2006
(51) Int. Cl.: B60H 1/00

(54) **Modular heating and conditioning unit of a vehicle and vehicle equipped with such unit**
Modular aufgebaute Heizungs- oder Klimaanlage eines Kraftfahrzeug und Kraftfahrzeug mit einer solchen Anlage
Dispositif modulaire de chauffage ou de climatisation d'un véhicule et véhicule équipé d'un tel dispositif

(30) Priority: 28.11.2005 IT MI20052266
(43) Date of publication of application: 30.05.2007
(73) Proprietor: IVECO S.p.A., 10156 Torino (IT)
(72) Inventor: Bellero, Domenico, 10026 Santena (IT); Giovine, Mauro, 10090 Castiglione Torinese (IT); Pippione, Eugenio, 10141 Torino (IT)
(74) Representative: Borsano, Corrado

(56) References cited:
- EP-A- 0 846 580
- WO-A-20/06050780
- DE-A1- 10 222 073
- DE-A1- 19 650 941
- US-A- 4 232 211
- US-A- 4 625 911
- US-A- 4 994 958
- PATENT ABSTRACTS OF JAPAN vol. 008, no. 143 (M-306), 4 July 1984 (1984-07-04) & JP 59 040916 A (MITSURU YAMANAKA), 6 March 1984 (1984-03-06)

## Description

### FIELD OF INVENTION

The present invention relates to a heating and conditioning unit for the passenger compartment of a vehicle, in particular an industrial or similar vehicle and a vehicle equipped with said unit.

### PRIOR ART

Vehicles are generally equipped with passenger compartment heating and ventilation systems. They include a fan, able to suck air from the outside or from the inside of the vehicle, a heater, that is a heat exchanger, which is generally fed with the engine coolant on the pipe side so as to transfer heat to the air to be fed to the passenger compartment. If heating is not required, it will be possible to stop or adjust the flow rate of the fluid in the heater, or, as it occurs more and more often, it will be possible to adjust the air flow which comes into contact with the exchanger and simultaneously an air flow which is circulated inside the passenger compartment without coming into contact with the exchanger. For example, a common solution involves one or more fins or deflecting hatches used for distributing the airflow fed by the fan or just by the movement of the vehicle between two channels, one of which includes the exchanger whereas the other is a bypass channel. The gathered air currents are then distributed to the passenger compartment through a series of channels and openings in the vehicle dashboard.

The systems may also include an evaporator for cooling the air, if required, in other words an exchanger where the fluid of a common refrigerating circuit is evaporated, generally on the pipe side, thereby withdrawing heat from the air that comes into contact with the evaporator. The air which is then fed to the heat exchanger or to the bypass channel generally flows through the evaporator; this does not cause problems because the latter withdraws heat only if the refrigerating circuit is in operation.

Furthermore, with industrial vehicles, an additional heater is commonly used for heating the passenger compartment, especially if the vehicle is not in motion.

Such heater can be of a different type: it is often a fuel burner - fed with air taken from the outside or part of the air sucked in by the fan, thus discharging the exhaust gases toward the outside - capable of transferring heat to the air to be fed to the passenger compartment; it can also be an air-air exchanger fed on one side with burnt gases produced by a burner placed in another more suitable position. According to another possible solution, it can be an electric heater, powered with batteries or by a generator operated by an auxiliary combustion engine, or an exchanger fed by a cooling circuit of an auxiliary motor or by a circuit heated by the cooling air of an auxiliary motor.

The above components are generally housed in the central front part of the passenger compartment, beneath the dashboard or inside of it, between the pedals and the space used for the passenger's feet beside the driver. The air channels are connected to passages in the dashboard, connected to the various openings in the vehicle (for example those used for sending air towards the feet, windshield and half way up towards the passengers); the dashboard also contains adjustment and deflection systems to suitably distribute the air through the openings.

The additional heater, if any, is sometimes placed in another position, for example behind a seat, instead of with the other components placed frontally in the passenger compartment. This occurs especially when using burners or air-air exchangers, but also when using electric resistors or when it is impossible to combine the additional heater with main one. It has also been suggested to set up the additional heater with other components beneath the dashboard or in the dashboard. Nevertheless, there difficulties occur due to the overall dimensions, hence possible interference between the thermal mass of the main exchanger which may be cold, in case the two exchangers are combined, or subject to the same air current, and by the fact that the distribution passages contained in the dashboard of the vehicle are generally designed for distributing air when running, hence in the front part of the passenger compartment, at the driver's feet and at the passenger's feet if heating is required. In fact, if heating is required (via the additional heater) during stops, it would be necessary to direct warm air downward and toward the back of the passenger compartment, where the bunks are commonly located.

Finally, the co-presence of the additional heater in one module along with other components generates considerable dimensional problems. This is an obstacle when standardized modules are required, suitable for several types of vehicles equipped with an additional heater or without such component. A module designed for the installation of such heater, although in absence of it, could be too bulky for some types of vehicle, not to mention useless costs for materials.

US 4 625 911 discloses a heating and conditioning unit according to the preamble of claim 1.

### SUMMARY OF THE INVENTION

The above problems have been solved; according to the present invention, by a heating and conditioning unit of a vehicle according to appended claim 1.

The attached claims are directed to particular objects of the invention.

### LIST OF FIGURES

This invention will now be described through a detailed description of preferred but not exclusive embodiments, given only as an example, with the aid of the enclosed figures wherein:
figure 1 shows a schematic view of a longitudinal section of a part of a vehicle passenger compartment, according to a vertical plane passing through the centerline of the vehicle, comprising a unit according to an embodiment of the invention;
figure 2 schematically shows a section similar to that of figure 1 comprising a unit according to another embodiment of the invention.

### DETAILED DESCRIPTION OF AN EMBODIMENT

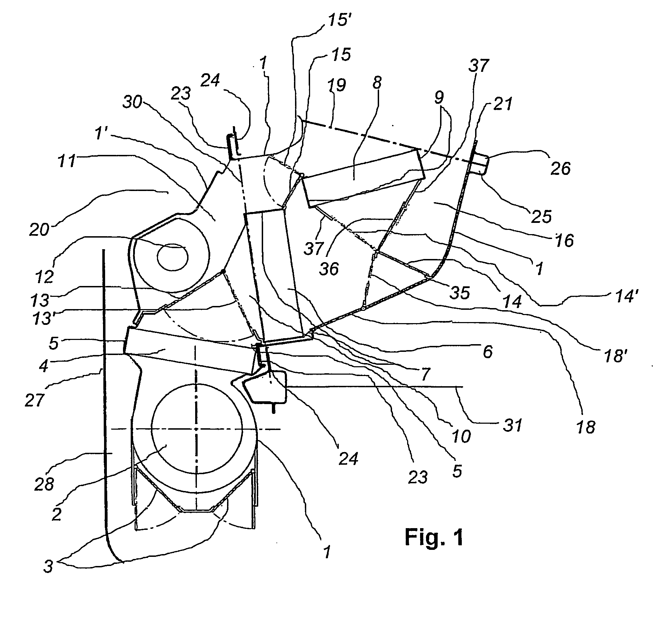

Figure 1 schematically represents a section of a unit based on the present invention. It can be housed in the center front part of the vehicle.

One can distinguish a casing 1 containing a fan 2, which can include an electric motor and one or more impellers; in the case shown, there is a central motor and two side impellers lined up along an axis perpendicular to the axis of the drawing. The fan is used for sucking air from the openings with baffles 3, preferably adjustable, so as to allow air coming from outside the vehicle to enter. Other inlets may be present (not shown), for example laterally placed (i.e. in a direction perpendicular to the plane of the drawing) so as to suck air from the inside of the passenger compartment, if recirculation is required. The fan is used for sending air to a filter 4. The filter, which can be of known type, can be placed on special supports 5 supported by the casing 1, or being part of it; according to an embodiment of the invention, the filter can be removed or inserted perpendicularly to the drawing so that it can be easily replaced, after opening a special door in a side wall of the casing, when the unit is not installed on the vehicle. The filter could also be placed in another position, for example upstream of the fan.

According to a possible embodiment of the invention, the casing includes two side walls (not shown) displaced parallel to the plane of the drawing (hence perpendicular to the shown walls of the casing) so as to close it laterally.

According to another embodiment of the invention, the unit may include an evaporator 6, which can be supported by supports 7, which can be similar to the supports of the filter. The evaporator, of a per se known type, can be suitably connected to an inlet and to an outlet of the coolant, for example by pipes or joints which can partly run inside the casing thus passing through it, preferably outside the passenger compartment, and protections and insulations for pipes and joints may be present in correspondence of the point of passing through.

The casing includes the heat exchanger 8, which is also supported by supports 9, preferably fixed to the casing. Connections to the pipes of the fluid used for transferring heat can be carried out similarly to those described for the evaporator. Preferably, there are portions of pipes inside the unit connecting the exchanger 8 with external water circulation pipes as they can be connected to these pipes by running through the casing in a position which is outside of the passenger compartment, for instance laterally to the secondary channelwhose width may be smaller than that of the rest of the unit.

According to a first embodiment of the invention, there is a main channel 10 for the flow of air inside the casing and a secondary channel 11. The secondary channel can contain an auxiliary heater 12 which can be suitably positioned, for example supported and connected with supply lines and external exhaust lines like all the other components. Similarly to all known prior art, such auxiliary heater can be of a different kind, like the ones listed above, and its shape and position inside the secondary channel 11 may also depend on its structure. For example, it may be a burner in the shape of a finned pipe.

It can be connected to a combustion air intake pipe which connects it to the outside of the unit in a suitable position, to the burnt gas exhaust pipes (again, to the outside of the unit) and to fuel supply pipes, fuel that may be the same used for the vehicle engine.

According to a preferred embodiment, the auxiliary burner is located outside the passenger compartment after installing the unit.

According to another possible embodiment of the invention, the casing may also have doors, e.g. in the side walls, whereby the components can be introduced or pulled out without removing the side wall. The supports can be sliders, or simple seats, which may also include spring devices to hold the components.

The casing preferably contains airflow conveying and distribution means, such as a series of fins or baffles; the first baffle 13, which can move between the shown position and position 13', is used for distributing the flow of air between the main and secondary channel, according to a preferred embodiment, thus diverting it completely into one or the other of the two channels.

The second baffle 14 is used for distributing the flow, coming from the main channel, between the exchanger 8, which is capable of heating the flow running through it, or into a bypass 16 if the air does not need to be heated; its position may be the one represented or the one indicated with 14', hence adjusting the heat which is transferred to the passenger compartment. According to a preferred embodiment of the invention, it comprises two fins 35 and 36 integral with each other and substantially displaced at a angle between each other, preferably at a right or almost right angle, and hinged so as to revolve around their common edge. By cooperating with the walls 37, the second baffle can continuously adjust the flow of air between the bypass and the exchanger until the flow is completely excluded from one side or the other.

As seen before, the main channel conveys air through the exchanger 8 and/or through the bypass 16, as well as through the evaporator 7, if any, thereby satisfying the cooling and ventilation requirements as well as the heating requirements in case the vehicle is in motion and if the exchanger 8 is active.

The third and fourth baffles 15 and 18 are used for conveying the flow of air that runs through the secondary channel in the dashboard, if in the shown position, or (if in positions 15' and 18') toward the lower part of the passenger compartment, so that the air can be directed to the back of the passenger compartment (as a matter of fact, the auxiliary heater is often useful for heating bunks, since it is used during stops, although the heating is still possible through the dashboard passages, if necessary). In fact, the invention also relates to a unit comprising means for conveying a flow of air running through said second channel alternately between an outlet in common with said main channel (the boundary plane 19 between the vehicle dashboard and the unit), that is, in common with said heat exchanger 8 and said bypass 16, or an outlet (baffle 18) used for conveying air towards the lower part and towards the back side of the passenger compartment. As a matter of fact, said baffle is preferably placed near the floor and in a central position relative to the passenger compartment, thereby directing the air towards the back. According to further possible embodiment of the invention, the fourth baffle 18 leads to another special duct used for conveying the air where desired.

According to the embodiment represented in the figure, the third and fourth baffles are able to create a passage for the flow coming from the secondary channel, which partly intersects the main channel. This particular embodiment allows to place both the secondary channel and the additional heater in a position at least partly above than that of the main channel, which is quite useful when dealing with particular installation and structural problems, thus preserving the symmetry of the unit relative to a longitudinal plane of the vehicle. However, different setups of the channels are possible, if deemed necessary.

The baffles 15 and 18 remain in the position represented in figure 1 even when the air runs through the main channel; in fact, in this case the additional heater is not enabled.

The unit communicates with the dashboard 21 of the vehicle (the boundary between the dashboard and unit is represented by plane 19). The air that runs through the unit through the main channel, through the exchanger 8 or the bypass 16 and the air that flows through the secondary channel 1 - except for the above case, in which the air is conveyed through the hatches 18 - runs through this plane ending up in the dashboard passages, which suitably distribute it into the passenger compartment.

If not required, there may not be an evaporator 6, although the unit can be designed with the supports 7 in order to install it afterwards.

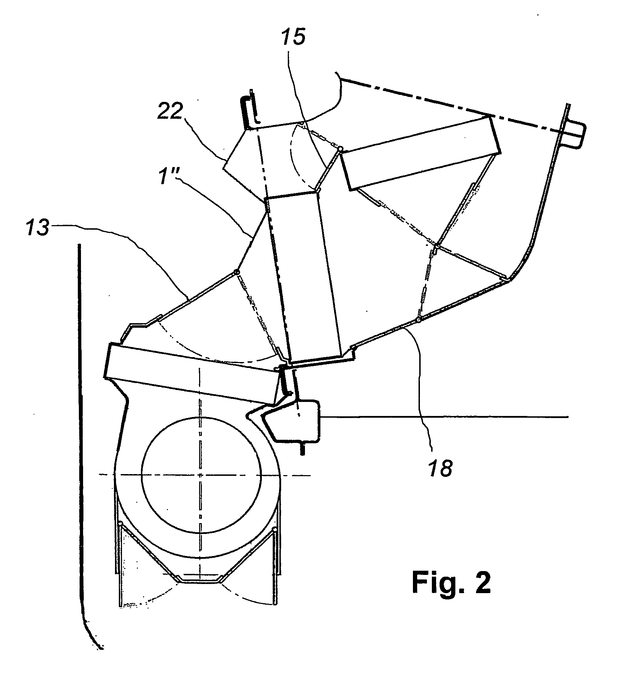

Figure 2 shows a unit, according to a different embodiment of the invention, without the secondary channel. In this case, the casing part 1' in figure 1 is missing; the casing is delimited by the wall 1" which, in the previous case, was used for separating the two channels. The unit in figure 2 is set up for the addition of said channel, hence the baffles 13, 15 and 18 are kept although they are inoperative and blocked in the position shown; the wall 22 can be broken in order to add the secondary channel. The inoperative baffles may also be replaced with portions of wall which may be broken and replaced with the baffles if necessary. According to a preferred embodiment, the unit is such that the secondary channel can be added by increasing the general volume of the unit. Thus the unit can also be used in vehicles where the space for the secondary channel is either missing or occupied by other structures, hence it will be easier to achieve a standard production suitable for several types of vehicle. The position of the possible secondary channel above the primary channel facilitates the adaptability to different types of vehicle.

According to a particular embodiment of the invention, the unit can be inserted through an opening on the front side of the vehicle. The unit can be pre-assembled with all components introduced through the opening and fixed in place with special means, for example means capable of fixing it to the dashboard and/or to walls which delimit the passenger compartment.

Figure 1 represents a unit, provided with sealing means 23, for sealing with walls 24 delimiting the passenger compartment, for example a gasket frame, or a flange or brackets which fix it in place with bolts if necessary. There may preferably be dashboard fastening means 25, such as one or more eyelets used for being bolted to corresponding eyelets 26 of the dashboard 21.

The unit can be introduced, for example, by removing a ventilation grid located on the front side of many vehicles, the position of which is approximately indicated by line 27. The vehicle shown has an engine positioned beneath the passenger compartment. The wall 24 of the passenger compartment separates it from a ventilation compartment 28, which can be above the engine compartment, thus reaching the front opening. The grid can be the same as the one which allows the air to flow to the engine compartment, particularly to the radiator which can be positioned beneath the unit. Partition walls may be installed between the engine compartment and the ventilation compartment 28. Part of the unit reaches the ventilation compartment after being fastened, for example beneath a zone 20 which normally houses the motor of the windshield wipers. Thus the unit closes a hole, represented by plane 30 located in the central front part of the passenger compartment, for example near the floor 31 beneath the dashboard, in the passenger compartment wall 24, whereby the unit can be closed with means 23.

Other embodiments are possible, which include the installation of components as well as different parts of the casing both from the inside and from the outside of the passenger compartment or in any other known way. The casing consists of several parts which are also partly installed from the inside of the passenger compartment; additionally, the various components can also be introduced both from the outside and from the inside, depending on the structural solutions taken into account.

The invention also applies to a vehicle provided with a unit described above and that can be, according to a possible embodiment of the invention, positioned inside the vehicle according to one of the methods described above.

## Claims

1. Heating and conditioning unit of a vehicle comprising:
a casing (1);
a main air circulation channel (10);
a heat exchanger (8) capable of being fed with the coolant of the vehicle's engine;
said unit either comprising or being designed for addition of:
a secondary air circulation channel (11) able to contain an additional heater (12;
means (13) for distributing a flow of air between said main channel and said secondary channel;
means (15, 18) capable of conveying a flow of air running through said second channel alternately between an outlet in common with said main channel or an outlet (18) used for conveying air towards the lower part and towards the back side of the passenger compartment;
**characterized in that** said means (15, 18) for conveying the airflow running through said second channel are suited for creating a passage for the flow coming from the secondary channel, passage that partly intersects the main channel at a point upstream of said heat exchanger (8).

2. Unit according to claim 1, **characterized in that** said means for distributing the airflow comprise a baffle (13) capable of conveying air alternately into said main channel or said secondary channel.

3. Unit according to claim 2, **characterized in that** said baffle (13) is placed upstream of said main and secondary channel.

4. Unit according to claim 1, **characterized in that** said secondary channel is placed in a position at least partly above said main channel.

5. Unit according to any of the previous claims, **characterized by** the fact that it comprises an additional heater (12) housed in said secondary channel.

6. Unit according to any of the previous claims, **characterized in that** said additional heater is located outside the passenger compartment of the vehicle, when the unit is installed, preferably inside the ventilation compartment.

7. Unit according to claim 5, wherein said additional heater is a burner or an air-air exchanger fed with exhaust gases coming from a burner.

8. Unit according to claim 7, wherein said burner is connected to a combustion air supply line and to a burnt gas exhaust line passing through said casing, outside the passenger compartment.

9. Unit according to the claim 5, wherein said additional heater is an electric heater.

10. Unit according to any of the previous claims, **characterized in that** it comprises a bypass (16) and means (14) for distributing the airflow between said bypass and said heat exchanger (8).

11. Unit according to any of the previous claims, **characterized in that** it comprises an evaporator (6) for cooling the air.

12. Vehicle equipped with a unit according to any of the previous claims.

13. Vehicle according to claim 12, wherein said common outlet leads to the dashboard of the vehicle.

14. Vehicle according to any of claims 12 or 13, wherein said unit is located in the front side of the passenger compartment.

15. Vehicle according to claim 13, wherein said outlet (18), used for conveying air towards the lower part and towards the back side of the passenger compartment, is placed near the floor of the passenger compartment in a central position.

16. Vehicle according to claim 13, wherein said outlet (18), used for conveying air towards the lower part and towards the back side of the passenger compartment, is connected to a duct capable of directing the airflow towards the back of the passenger compartment.

## Patentansprüche

1. Heizungs- und Klimaanlageneinheit eines Fahrzeugs, umfassend:
ein Gehäuse (1);
einen Hauptluftzirkulationskanal (10);
einen Wärmetauscher (8), der mit dem Kühlmittel des Motors des Fahrzeugs beliefert werden kann;
wobei die Einheit entweder umfasst oder zusätzlich ausgebildet ist mit:
einem Sekundärluftzirkulationskanal (11), der einen zusätzlichen Heizer (12) enthalten kann;
ein Mittel (13) zum Verteilen einer Luftströmung zwischen dem Hauptkanal und dem Sekundärkanal;
ein Mittel (15, 18), das eine durch den zweiten Kanal gelangende Luftströmung abwechselnd zwischen einem Auslass gemeinsam mit dem Hauptkanal oder einem Auslass (18) übertragen kann, der zum Übertragen von Luft in Richtung des unteren Teils und in Richtung der Rückseite des Fahrgastraumes verwendet ist;
**dadurch gekennzeichnet, dass** das Mittel (15, 18) zum Übertragen der durch den zweiten Kanal gelangenden Luftströmung zur Erzeugung eines Durchganges für die von dem Sekundärkanal stammende Strömung geeignet ist, und zwar eines Durchgangs, der den Hauptkanal an einem Punkt oberstromig des Wärmetauschers (8) überschneidet.

2. Einheit nach Anspruch 1,
**dadurch gekennzeichnet, dass**
das Mittel zum Verteilen der Luftströmung eine Ablenkeinrichtung (13) umfasst, die in der Lage ist, Luft abwechselnd in den Hauptkanal oder den Sekundärkanal zu übertragen.

3. Einheit nach Anspruch 2,
**dadurch gekennzeichnet, dass**
die Ablenkeinrichtung (13) oberstromig des Haupt- und Sekundärkanals angeordnet ist.

4. Einheit nach Anspruch 1,
**dadurch gekennzeichnet, dass**
der Sekundärkanal in einer Position zumindest teilweise oberhalb des Hauptkanals angeordnet ist.

5. Einheit nach einem der vorhergehenden Ansprüche,
**gekennzeichnet durch**
die Tatsache, dass sie einen zusätzlichen Heizer (12) umfasst, der in dem Sekundärkanal untergebracht ist.

6. Einheit nach einem der vorhergehenden Ansprüche,
**dadurch gekennzeichnet, dass**
der zusätzliche Heizer außerhalb des Fahrgastraumes des Fahrzeugs angeordnet ist, wenn die Einheit angebracht ist, bevorzugt innerhalb des Belüftungsraumes.

7. Einheit nach Anspruch 5,
wobei der zusätzliche Heizer ein Brenner oder ein Luft-Luft-Tauscher ist, der mit von einem Brenner stammenden Abgasen beliefert wird.

8. Einheit nach Anspruch 7,
wobei der Brenner mit einer Leitung zum Liefern von Verbrennungsluft und mit einer Leitung zum Austrag von verbranntem Gas, die durch das Gehäuse verläuft, außerhalb des Fahrgastraumes verbunden ist.

9. Einheit nach Anspruch 5,
wobei der zusätzliche Heizer ein elektrischer Heizer ist.

10. Einheit nach einem der vorhergehenden Ansprüche,
**dadurch gekennzeichnet, dass**
sie eine Umgehung (16) und ein Mittel (14) zur Verteilung der Luftströmung zwischen der Umgehung und dem Wärmetauscher (8) umfasst.

11. Einheit nach einem der vorhergehenden Ansprüche,
**dadurch gekennzeichnet, dass**
sie einen Verdampfer (6) zum Kühlen der Luft umfasst.

12. Fahrzeug, das mit einer Einheit nach einem der vorhergehenden Ansprüche ausgerüstet ist.

13. Fahrzeug nach Anspruch 12,
wobei der gemeinsame Auslass zu dem Armaturenbrett des Fahrzeugs führt.

14. Fahrzeug nach einem der Ansprüche 12 oder 13,
wobei die Einheit in der Vorderseite des Fahrgastraumes angeordnet ist.

15. Fahrzeug nach Anspruch 13,
wobei der Auslass (18), der zum Übertragen von Luft in Richtung des unteren Teils und in Richtung der Rückseite des Fahrgastraumes verwendet ist, nahe dem Boden des Fahrgastraumes in einer zentralen Position angeordnet ist.

16. Fahrzeug nach Anspruch 13,
wobei der Auslass (18), der zum Übertragen von Luft in Richtung des unteren Teils und in Richtung der Rückseite des Fahrgastraumes verwendet ist, mit einer Röhre verbunden ist, die in der Lage ist, die Luftströmung in Richtung der Rückseite des Fahrgastraumes zu führen.

## Revendications

1. Unité de chauffage et de climatisation d'un véhicule, comportant :
un boîtier (1),
un canal de circulation d'air principal (10),
un échangeur de chaleur (8) pouvant être alimenté en fluide de refroidissement du moteur du véhicule,
ladite unité comportant ou étant conçue pour l'ajout :
d'un canal de circulation d'air secondaire (11) pouvant contenir un dispositif de chauffage supplémentaire (12),
de moyens (13) pour répartir un écoulement d'air entre ledit canal principal et ledit canal secondaire,
de moyens (15, 18) pouvant acheminer un écoulement d'air s'étendant à travers ledit canal secondaire alternativement entre une sortie commune audit canal principal ou une sortie (18) utilisée pour acheminer l'air vers la partie inférieure et vers le côté arrière de l'habitacle,
**caractérisée en ce que** lesdits moyens (15, 18) pour acheminer l'écoulement d'air s'étendant à travers ledit canal secondaire sont adaptés pour créer un passage pour l'écoulement provenant du canal secondaire, passage qui coupe partiellement le canal principal en un point situé en amont dudit échangeur de chaleur (8).

2. Unité selon la revendication 1, **caractérisée en ce que** lesdits moyens pour répartir l'écoulement d'air comportent un déflecteur (13) pouvant acheminer de l'air alternativement dans ledit canal principal ou dans ledit canal secondaire.

3. Unité selon la revendication 2, **caractérisée en ce que** ledit déflecteur (13) est placé en amont desdits canaux principal et secondaire.

4. Unité selon la revendication 1, **caractérisée en ce que** ledit canal secondaire est placé dans une position située au moins partiellement au-dessus dudit canal principal.

5. Unité selon l'une quelconque des revendications précédentes, **caractérisée par le fait qu'**elle comporte un dispositif de chauffage supplémentaire (12) habrité dans ledit canal secondaire.

6. Unité selon l'une quelconque des revendications précédentes, **caractérisée en ce que** ledit dispositif de chauffage supplémentaire est positionné à l'extérieur de l'habitacle du véhicule, lorsque l'unité est installée, de préférence à l'intérieur du compartiment de ventilation.

7. Unité selon la revendication 5, dans laquelle ledit dispositif de chauffage supplémentaire est un brûleur ou un échangeur air-air alimenté en gaz d'échappement provenant d'un brûleur.

8. Unité selon la revendication 7, dans laquelle ledit brûleur est relié à une ligne d'alimentation en air de combustion et à une ligne d'évacuation de gaz brûlés passant à travers ledit boîtier, à l'extérieur de l'habitacle.

9. Unité selon la revendication 5, dans laquelle ledit dispositif de chauffage supplémentaire est un dispositif de chauffage électrique.

10. Unité selon l'une quelconque des revendications précédentes, **caractérisée en ce qu'**elle comporte une dérivation (16) et des moyens (14) pour répartir l'écoulement d'air entre ladite dérivation et ledit échangeur de chaleur (8).

11. Unité selon l'une quelconque des revendications précédentes, **caractérisée en ce qu'**elle comporte un évaporateur (6) pour refroidir l'air.

12. Véhicule équipé d'une unité selon l'une quelconque des revendications précédentes.

13. Véhicule selon la revendication 12, dans lequel ladite sortie commune aboutit au tableau de bord du véhicule.

14. Véhicule selon l'une quelconque des revendications 12 ou 13, dans lequel ladite unité est positionnée dans le côté avant de l'habitacle.

15. Véhicule selon la revendication 13, dans lequel ladite sortie (18), utilisée pour acheminer de l'air vers la partie inférieure et vers le côté arrière de l'habitacle, est placée près du plancher de l'habitacle dans une position centrale.

16. Véhicule selon la revendication 13, dans lequel ladite sortie (18), utilisée pour acheminer de l'air vers la partie inférieure et vers le côté arrière de l'habitacle, est reliée à une conduite pouvant diriger l'écoulement d'air vers l'arrière de l'habitacle.
